**Europäisches Patentamt**

**European Patent Office**

**Office européen des brevets**

(19)

(11) Numéro de publication : **0 285 531 B1**

(12) **FASCICULE DE BREVET EUROPEEN**

(45) Date de publication du fascicule du brevet :
**20.05.92 Bulletin 92/21**

(51) Int. Cl.$^5$ : **G03B 21/64**

(21) Numéro de dépôt : **88420103.9**

(22) Date de dépôt : **29.03.88**

(54) **Dispositif de conditionnement de diapositives.**

(30) Priorité : **30.03.87 FR 8704765**

(43) Date de publication de la demande :
**05.10.88 Bulletin 88/40**

(45) Mention de la délivrance du brevet :
**20.05.92 Bulletin 92/21**

(84) Etats contractants désignés :
**AT BE CH DE ES GB GR IT LI LU NL SE**

(56) Documents cités :
**EP-A- 0 161 364**
**DE-B- 1 096 068**
**FR-A- 882 902**
**FR-A- 1 204 097**
**FR-A- 1 311 727**
**FR-E- 79 300**

(73) Titulaire : **INTER-COLOR**
**16 rue Etienne Rognon**
**F-69007 Lyon (FR)**

(72) Inventeur : **Rollet, Georges**
**Logis Saint Jean**
**F-38200 Les Cotes D'Arey (FR)**
Inventeur : **Alexandre, Bernard**
**les Charavelles Bâtiment Bleuets**
**F-38200 Vienne (FR)**
Inventeur : **Lami, Didier**
**Lubac-Lemps**
**F-07300 Tournon Sur Rhone (FR)**

(74) Mandataire : **Maureau, Philippe et al**
**Cabinet Germain & Maureau Le Britannia -**
**Tour C 20, bld Eugène Déruelle Boîte Postale**
**3011**
**F-69392 Lyon Cédex 03 (FR)**

## Description

La présente invention se rapporte à un dispositif de conditionnement de diapositives déjà montées chacune dans un cadre en carton, plastique, ou autre.

Les diapositives déjà montées sur leur cadre en carton ou en matière plastique sont ordinairement conditionnées dans des boîtes réalisées à cet effet. L'inconvénient de ce mode de conditionnement est de ne pas permettre un visionnement immédiat des diapositives. Ces boîtes ont en outre pour inconvénient de ne pas permettre un rangement à plat des lots de diapositives.

Le document EP-A-0161 364 décrit un dispositif de conditionnement de diapositives comportant une plaque de fond translucide avec laquelle une feuille transparente ménage des compartiments de stockage unitaire des diapositives.

Le document DE-B-1 096 068 décrit un dispositif de stockage de diapositives se présentant sous forme d'une grille délimitée par des glissières ménageant des compartiments unitaires pour les diapositives.

L'invention vise à pallier ces inconvénients des dispositifs connus. Elle est relative à un dispositif de conditionnement de diapositives encadrées. A cet effet, l'invention concerne un dispositif de conditionnement de diapositives encadrées dans des pochettes planes dont le fond est constitué par une feuille de matière translucide et dont la face supérieure est constituée par une feuille de matière transparente, le fond et la face supérieure étant séparés par un espace d'épaisseur correspondant à celle d'une diapositive, caractérisé en ce qu'il comprend plusieurs pochettes accolées par leurs grands côtés, chaque pochette comportant une largeur sensiblement égale à la largeur d'une diapositive, et une longueur légèrement supérieure au double de la longueur d'une diapositive, pour permettre le conditionnement de deux diapositives bout à bout et en contact, l'une au moins des extrémités de chaque pochette étant ouverte et comportant au niveau de l'ouverture, au moins un bourrelet obtenu par thermoformage de la feuille de fond et faisant saillie vers la feuille formant la face supérieure.

Avantageusement, les deux extrémités de chaque pochette sont ouvertes et munies chacune de bourrelets de retenue des diapositives.

Selon une autre caractéristique de l'invention, les feuilles constitutives des pochettes sont réalisées en un matériau semi-rigide.

De toute façon, l'invention sera bien comprise, et ses avantages et autres caractéristiques ressortiront, au cours de la description suivante, d'un exemple non limitatif de réalisation de ce dispositif, en référence au dessin schématique annexé dans lequel :

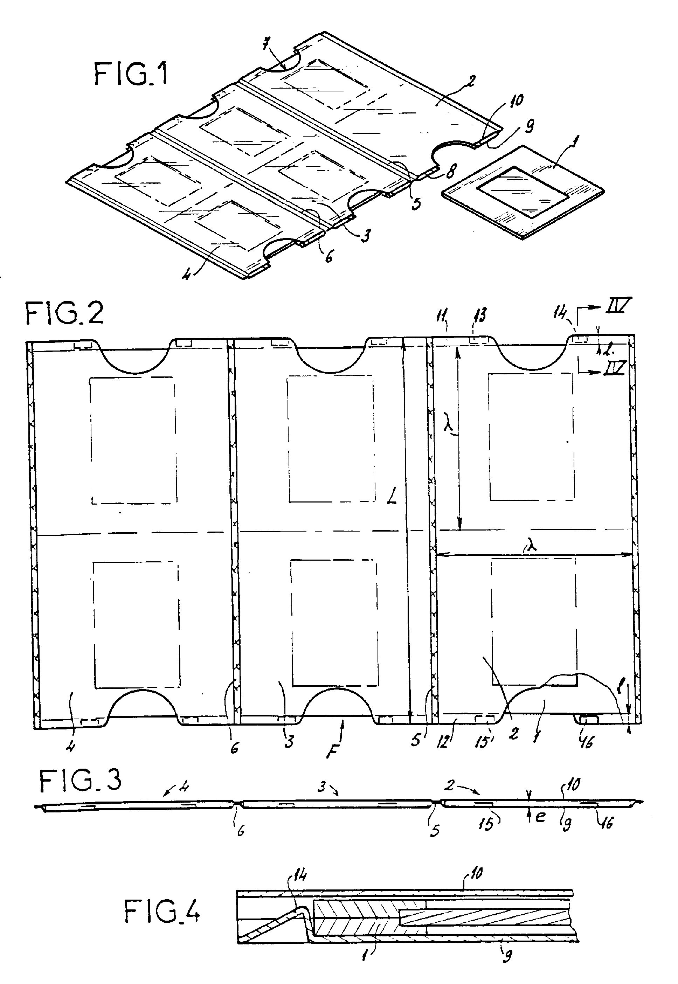

Figure 1 est une vue générale en perspective de ce dispositif de conditionnement ;

Figure 2 en est une vue en plan ;

Figure 3 en est une vue en bout, selon F de la figure 2 et sans les diapositives ;

Figure 4 est une vue en coupe partielle selon IV-IV de la figure 2.

En se reportant à l'ensemble des figures, cet emballage plan pour diapositives encadrées 1 à cadre carré se présente sous la forme de trois pochettes planes 2,3,4 qui sont chacune aptes à recevoir deux diapositives encadrées mises bout-à-bout. Les pochettes sont par suite rectangulaires, de longueur sensiblement égale au double de leur largeur, et leur largeur correspond, au jeu près destiné à permettre le coulissement de la diapositive, telle que 1, à celle du cadre carré d'une diapositive. Ces pochettes 2,3,4 sont adjacentes, coplanaires, et accolées l'une à l'autre en 5 et 6 par à chaque fois un grand côté du rectangle. Elles sont ouvertes à chacune de leurs deux extrémités 7,8, de sorte que l'on peut y glisser une diapositive par chaque bout.

Selon une caractéristique essentielle de l'invention, chaque pochette 2,3 ou 4, est formée de deux feuilles superposées et séparées par un espace d'épaisseur e juste suffisant pour livrer passage au cadre d'une diapositive :

   – une feuille inférieure 9 en une matière semi-rigide et translucide,

   – une feuille supérieure 10 en une matière semi-rigide et transparente.

Afin d'éviter que les deux diapositives, une fois introduites dans la pochette, n'en sortent d'elles mêmes, cette pochette est en réalité de longueur L légèrement supérieure, d'une quantité 21, au double de la largeur $\lambda$ du cadre carré d'une diapositive telle que 1. Sur chacune des deux bandes d'extrémité 11,12, de largeur 1, la feuille inférieure 9 présente deux bourrelets respectivement 13,14 et 15,16, qui constituent des entretoises partielles, ou cales, qui empêchent les diapositives 1 de sortir d'elles-mêmes de la pochette. Bien entendu, ces bourrelets 13,16 n'empêchent pas l'utilisateur de sortir la diapositive manuellement, en raison de la relative souplesse des feuilles 8 et 9 et des jeux existants.

Les diapositives encadrées 1 sont normalement livrées emballées par groupe de six dans l'étui plan qui vient d'être décrit. Comme une face 10 de chaque pochette 2,3,4 est transparente, et l'autre 9 translucide, l'usager peut visionner immédiatement, sans sortir les diapositives de l'étui, chacune des diapositives ou l'ensemble de celles-ci en dirigeant cet étui vers une source de lumière quelconque. Les faces 9 et 10 étant semi-rigides, il est aisé de les déformer manuellement pour, malgré les embouts 13 à 15, sortir une à une les diapositives de chaque pochette.

L'invention n'est bien entendu pas limitée à l'exemple de réalisation qui vient d'être décrit. Les pochettes peuvent être réalisées par groupes de deux, de quatre, ou même plus. Les bourrelets 14 sont réalisés par thermoformage. Les ensembles de pochettes peuvent être adaptés, par exemple à l'aide d'oeillets, pour être rangés dans une reliure existance ou réalisée spécialement à cet effet. Elles peuvent n'être ouvertes qu'à une seule extrémité, 7 ou 8, et totalement fermées à l'autre extrémité, etc...

**Revendications**

1. Dispositif de conditionnement de diapositives encadrées (1), ledit dispositif comportant des pochettes planes (2,3,4) dont le fond est constitué par une feuille (9) de matière translucide et dont la face supérieure est constituée par une feuille (10) de matière transparente, le fond et la face supérieure étant séparés par un espace (e) d'épaisseur correspondant à celle d'une diapositive encadrée, caractérisé en ce que le dispositif comprend plusieurs pochettes accolées par leurs grands côtés (5,6), chaque pochette comportant une largeur (λ) sensiblement égale à la largeur d'une diapositive, et une longueur (L) légèrement supérieure au double de la longueur d'une diapositive, pour permettre le conditionnement de deux diapositives bout à bout et en contact, l'une au moins des extrémités de chaque pochette étant ouverte et comportant au niveau de l'ouverture, au moins un bourrelet (13,14,15,16), obtenu par thermoformage de la feuille de fond (9) et faisant saillie vers la feuille (10) formant la face supérieure.

2. Dispositif selon la revendication 1, caractérisé en ce que les deux extrémités de chaque pochettes (2,3,4) sont ouvertes et munies chacune de bourrelets (13-16) de retenue des diapositives.

3. Dispositif selon l'une quelconque des revendications 1 et 2, caractérisé en ce que les feuilles (9,10) constitutives des pochettes sont réalisées en un matériau semi-rigide.

**Patentansprüche**

1. Verpackungsvorrichtung für gerahmte Diapositive mit ebenen Taschen (2, 3, 4), deren Boden aus einer Folie (9) aus durchscheinendem Material und deren Oberseite aus einer Folie (10) aus transparentem Material besteht, wobei der Boden und die Oberseite durch einen Zwischenraum (e) getrennt sind, dessen Dicke derjenigen eines gerahmten Diapositivs entspricht, dadurch gekennzeichnet, daß die Vorrichtung mehrere Taschen besitzt, die mit ihren großen Seiten (5, 6) zusammengefügt sind, daß die Breite ( ) jeder Tasche annäherend gleich der Breite eines Diapositivs ihre Länge (L) geringfügig größer ist als die doppelte Länge eines Diapositivs ist, so daß sie das Verpacken zweier Diapositive in einer Position ermöglicht, in der die Diapositive stumpf aneinanderstoßen und einander berühren, und daß wenigstens eines der Enden jeder Tasche offen ist und in Höhe seiner Öffnung wenigstens einen Wulst (13, 14, 15, 16) aufweist, der durch Thermoformung der Bodenfolie (9) gebildet ist und in Richtung auf die die Oberseite bildende Folie (10) hervorsteht.

2. Vorrichtung nach Anspruch 1, dadurch gekennzeichnet, daß die beiden Enden jeder Tasche (2, 3, 4) offen sind und jeweils mit Wülsten (13-16) zum Malten der Diapositive versehen sind.

3. Vorrichtung nach einem der Ansprüche 1 und 2, dadurch gekennzeichnet, daß die die Taschen bildenden Folien (9, 10) aus einem halbstarren Material hergestellt sind.

**Claims**

1. Device for packaging mounted slides (1), the said device incorporating flat pockets (2, 3, 4) whose base consists of a sheet (9) of translucent material and whose top face consists of a sheet (10) of transparent material, the base and the top face being separated by a space (e) with a thickness corresponding to that of a mounted slide, characterised in that the device comprises several pockets joined by their long sides (5, 6), each pocket having a width (λ) substantially equal to the width of a slide, and a length (L) slightly greater than twice the length of a slide, in order to allow the packaging of two slides end to end and in contact, at least one end of each pocket being open and having, at the opening, at least one pad (13, 14, 15, 16) obtained by thermoforming of the base sheet (9) and projecting towards the sheet (10) forming the top face.

2. Device according to claim 1, characterised in that the two ends of each pocket (2, 3, 4) are open and are each provided with pads (13-16) for retaining the slides.

3. Device according to either one of claims 1 and 2, characterised in that the sheets (9, 10) making up the pockets are produced from a semi-rigid material.

FIG.1

FIG.2

FIG.3

FIG.4

4